# EUROPÄISCHE PATENTSCHRIFT

(11) **EP 1 613 510 B1**
(45) Veröffentlichungstag und Bekanntmachung des Hinweises auf die Patenterteilung: **29.08.2007**
(21) Anmeldenummer: 04718184.7
(22) Anmeldetag: 06.03.2004
(51) Int. Cl.: B60R 21/00

(54) **STEUERGERÄT FÜR EIN RÜCKHALTESYSTEM**
CONTROL UNIT FOR A RESTRAINT SYSTEM
UNITE DE CONTROLE POUR SYSTEME DE RETENUE

(30) Priorität: 01.04.2003 DE 10314676; 08.10.2003 DE 10346623
(43) Veröffentlichungstag der Anmeldung: 11.01.2006
(73) Patentinhaber: ROBERT BOSCH GMBH, 70442 Stuttgart (DE)
(72) Erfinder: SCHOU, Frank, 70565 Stuttgart (DE); RINGGER, Klaus, 72622 Nuertingen (DE)
(86) Internationale Anmeldenummer: PCT/DE2004/000444
(87) Internationale Veröffentlichungsnummer: WO 2004/087468

(56) Entgegenhaltungen:
- EP-A- 0 995 646
- EP-A- 1 239 370

## Beschreibung

### Stand der Technik

Die Erfindung geht aus von einem Steuergerät für ein Rückhaltesystem nach der Gattung des unabhängigen Patentanspruchs.

Aus EP 1239370 A geht der Test eines Schnittstellenbausteins hervor, bei dem im Schnittstellenbaustein abgespeicherte Werte für einen weiteren Test verwendet werden. Bei diesen Testsensorwerten handelt es sich um emulierte Sensorwerte. Aus EP 995646 A ist es bekannt, mittels der Übertragung eines Codesignals eine Entschärfung von Aktuatoren, die gleichzeitig oder nacheinander geschieht, zu erreichen. Das Codesignal kann über eine Diagnose- oder eine Busschnittstelle in das Steuergerät eingespeist werden.

Aus DE 100 54 681 A1 ist ein Steuergerät für ein Rückhaltesystem bekannt, das dem Oberbegriff des Anspruchs 1 entspricht und das alle angeschlossenen pyrotechnischen Zündelemente zünden kann, weil das Steuergerät über eine Schnittstelle einen Code erhält, sodass in Abhängigkeit von dem Code alle Zündkreise und der Auslösealgorithmus zur Zündung der Zündkreise konfiguriert werden.

In bestimmten Märkten wie Japan ist in Steuergeräten für Rückhaltesysteme eine sogenannte Funktion zur Entsorgungszündung gesetzlich vorgeschrieben. Sie dient dazu, bei der Verschrottung des Fahrzeugs alle pyrotechnischen Zünd- und Gaserzeugungselemente von Airbags und Gurtstraffern gefahrlos zu zünden, bzw. abzubrennen. Danach ist der weitere Verschrottungsvorgang ohne Gefährdung durch die Airbags und ohne Gefährdung der Umwelt möglich. Außerdem müssen die abgebrannten pyrotechnischen Elemente nicht nur aufwändig entsorgt werden, sondern können der Altmetallverwertung zugeführt werden.

### Vorteile der Erfindung

Das erfindungsgemäße Steuergerät mit den Merkmalen des unabhängigen Patentanspruchs hat demgegenüber den Vorteil, dass ein Software-Element über eine bereits vorhandene Schnittstelle, vorzugsweise eine Diagnoseschnittstelle, des Steuergeräts in das Steuergerät eingespeist wird, wobei das Softwareelement dann alle Zündkreise und den Auslösealgorithmus zur Zündung aller Zündkreise konfiguriert und für einen Sicherheitsbaustein, der unabhängig von einem Prozessor im Steuergerät die Sensorwerte überprüft und dann gegebenenfalls in Abhängigkeit von der Überprüfung die Zündkreise freigibt, solche Sensorwerte emuliert, sodass der Sicherheitsbaustein diese

Zündkreise alle freigibt. Es wird also ein Auslösefall für alle Zündkreise vorgespiegelt. Dies ermöglicht dann, dass über dieses Software-Element in einfacher Weise ohne zusätzliche Stecker über die bereits vorhandene Hardware alle Zündelemente gezündet werden können, sodass die Entsorgungszündung damit in einfachster Weise gewährleistet wird. Die Emulation der Sensorwerte ist notwendig, da auf den Sicherheitspfad über die Diagnoseschnittstelle nicht zugegriffen werden kann. Das Software-Element kann auch so ausgeführt sein, dass es lediglich ein Befehl ist, der dazu führt, dass eine weitere Software im Steuergerät aktiviert wird, die den Auslösealgorithmus und die Zündkreise zur Zündung aller vorhanden Zündelemente konfiguriert und die Sensorwerte emuliert, um letztlich die Zündelemente alle zu zünden.

Durch die in den abhängigen Ansprüchen angegebenen Merkmale und Weiterbildungen sind vorteilhafte Verbesserungen des im unabhängigen Patentanspruch angegebenen Steuergeräts für ein Rückhaltesystem möglich.

Aus Vereinheitlichungsgründen ist es besonders vorteilhaft, dass die Diagnoseschnittstelle entweder ein CAN-Bus ist oder eine K-Line ist. Die K-Line ("Kommunikations-Leitung") ist eine standardisierte Hardwareschnittstelle, über die z.B. die Werks- oder auch andere Diagnosen (Werkstattdiagnose) gemacht werden können. Vorteilhafterweise sind der Prozessor, der Sicherheitsbaustein und wenigstens ein Sensorbaustein und/oder wenigstens ein Schnittstellenbaustein zum Anschluss von externen Sensoren über einen Bus verbunden, wobei der Prozessor auf dem Bus die Sensorwerte emuliert, sodass der Sicherheitsbaustein diese emulierten Sensorwerte überprüft. Als Bus wird vorteilhafterweise der sogenannte SPI (Serial Peripherial Interface)-Bus verwendet. Die SPI-Leitung weist selbst fünf einzelne Leitungen auf. Da es sich um eine Synchronübertragung handelt, ist eine Taktleitung, die mit CLK gekennzeichnet ist, vorhanden. Für die Datenübertragung vom Master, das ist hier der Prozessor, zu einem Slave, beispielsweise einem Sensor-IC oder einem Schnittstellenbaustein, ist die MOSI (Master Out Slave In)-Leitung vorhanden. Für die Datenübertragung von einem Slave zu dem Master ist hingegen die MISO (Master In Slave Out)-Leitung vorhanden. Um den entsprechenden Slave auszuwählen, wird die CS-Leitung (Chip Select) verwendet. Um die SPI-Datenübertragung freizugeben, wird eine Enable-Leitung, die mit EN gekennzeichnet ist, verwendet. Die SPI-Leitung geht von einem Master aus und verzweigt sich dann zu den einzelnen Slaves, wobei die SPI-Leitung aber immer die fünf einzelnen Leitungen aufweist. Hier ist nun vorgesehen, dass der Prozessor über die MISO-Leitung, über die der Prozessor normalerweise Daten empfängt, diese emulierten Sensorwerte überträgt, um damit dem Sicherheitsbaustein die emulierten Sensorwerte vorzuspiegeln. Dafür ist die MISO-Leitung mit einem Input-Output-Port des Prozessors zur Übertragung der emulierten Sensorwerte verbunden.

Weiterhin ist im Prozessor ein Boot-Loader vorteilhafterweise vorgesehen, der das Software-Element lädt und dann sofort startet. Vorteilhafterweise kann weiterhin ein Reset-Schalter vorgesehen sein, der zum Neustart des wenigstens einen Sensorbausteins und Sicherheitsbausteins vorgesehen ist. Auch die Zündkreise können damit neu gestartet werden.

### Zeichnung

Ausführungsbeispiele der Erfindung sind in der Zeichnung dargestellt und werden in der nachfolgenden Beschreibung näher erläutert.

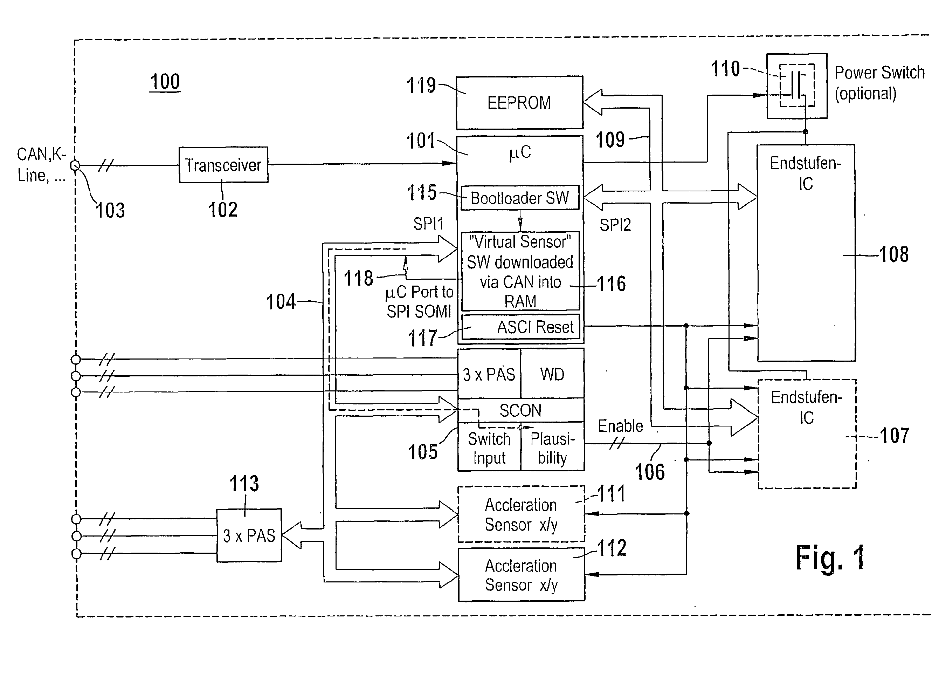

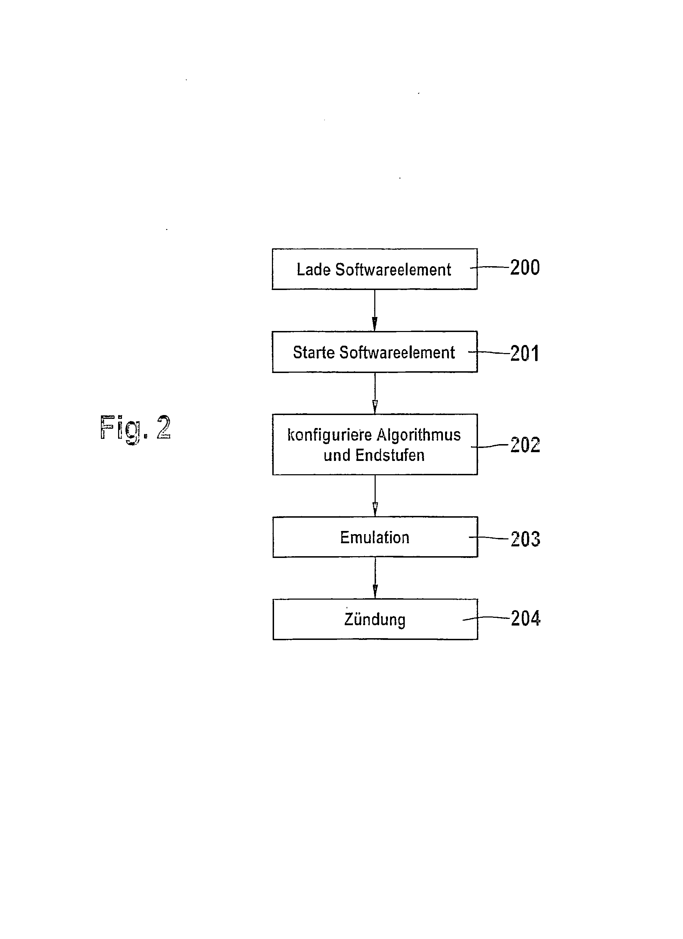

Es zeigen Figur 1 ein Blockschaltbild des erfindungsgemäßen Steuergeräts und Figur 2 ein Flussdiagramm.

### Beschreibung

Es wird ein Entsorgungszündungskonzept über bereits im Airbagsteuergerät vorhandene Ihundendiagnoseschnittstellen wie CAN oder K-Line ohne zusätzliche Schnittstellen vorgeschlagen. Es wird dabei auf die vorhandene mechanische und elektrische Hardware zurückgegriffen. Insbesondere ist bei dem erfindungsgemäßen Steuergerät vorgesehen, dass ein unabhängiger Sicherheitspfad, der durch einen Sicherheitsbaustein realisiert wird, durch die Emulation von solchen Sensorwerten getäuscht wird, die einen Auslösefall für alle Zündelemente anzeigen.

Der Prozessor, der ein Mikrocontroller sein kann, wertet insbesondere über einen SPI-Bus verfügbare Sensorkanäle wie Beschleunigungswerte und Drehratenwerte aus und verarbeitet diese entsprechend den implementierten Algorithmen. Das sind solche Algorithmen, die zur Ansteuerung der Rückhaltemittel dienen, die über die Zündelemente gezündet werden, sofern es sich um pyrotechnisch auslösbare Rückhaltemittel wie Airbag oder Gurtstraffer handelt. Der Mikrocontroller greift über einen unter Umständen zweiten SPI-Bus auf Endstufen-ICs, also die Zündkreise, zu. Die Endstufen-ICs überwachen das Zündelement und sorgen im Auslösefall dafür, dass die Auslöseenergie den angeschlossenen Zündelementen zugeführt wird.

Zur Realisierung des vom Mikrocontroller unabhängigen Hardwarepfads wird ein weiter IC verwendet, der hier als Sicherheitsbaustein bezeichnet wird. Dieser Sicherheitsbaustein ist an den selben SPI-Bus wie die Sensoren und der Mikrocontroller angeschlossen. Der Sicherheitsbaustein kann nur einmal nach jedem Einschalten des Steuergeräts konfiguriert werden. Danach kann nicht mehr schreibend auf ihn zugegriffen werden. Der Sicherheitsbaustein überwacht die auf den SPI-Bus übertragenen Sensordaten und vergleicht sie mit gespeicherten Grenzwerten. Überschreitet ein Sensor definierte Schwellen, so gibt dieser Sicherheitsbaustein unabhängig vom Mikrocontroller ein Plausibilitätssignal für die Auslösung bestimmter Zündkreise. Der Sicherheitsbaustein besteht demnach aus Schaltkreisen, die in ihrer Komplexität wesentlich einfacher sind als die eines Mikrokontrollers.

Erfindungsgemäß wird in den Mikrocontroller über eine Diagnoseschnittstelle eine spezielle Entsorgungszündungssoftware, die hier mit Software-Element beschrieben ist, direkt in einen RAM-Speicher geladen und dort gestapelt. Dazu wird eine sogenannte Boot-Loader-Software verwendet.

Aufgabe der Entsorgungszündungssoftware ist es, das Steuergerät mit allen Signalen zu bedienen, sodass ein unterbrechungsfreier Betrieb des Steuergeräts möglich ist. Dazu gehört, die Watch-Dogs zu bedienen und eine Buskommunikation zu ermöglichen. Weiterhin ist es die Aufgabe, den Airbagalgorithmus im Mikrocontroller so zu manipulieren, also zu konfigurieren, dass der Mikrocontroller die Auslösung aller Zündkreise freigibt und zündet. Eine weitere Aufgabe ist, den Sicherheitsbaustein dazu zu veranlassen, dass dieser die Plausibilität für die Endstufen-ICs liefert.

Ein weiterer Bestandteil eines solchen Konzepts kann optional eine einfache Schaltung zum Reset der Sensor- und Endstufen-ICs sowie des Sicherheitsbausteins, gesteuert vom Mikrocontroller sein. Die Boot-Loader Software steuert den Resetschalter. Durch diese Schaltung lässt sich das Entsorgungszündungskonzept flexibler handhaben, da nach einem solchen Reset neu konfiguriert werden kann. Dies kann unabhängig von der Initialisierungsphase des Steuergeräts erfolgen, bei deren Ende alle ICs verriegelt werden und ein Schreibzugriff danach unmöglich ist. Das Software-Element wird nunmehr einen virtuellen Sensor emulieren, der über den SPI-Bus, an dem die physikalischen Sensoren und der Sicherheitsbaustein eingeschlossen sind, emulierte Sensordaten auf den SPI-Bus einspeist. Diese emulierten Sensordaten werden vom Sicherheitsbaustein ausgewertet und veranlassen den Sicherheitsbaustein dazu, die Endstufen-ICs freizugeben.

Figur 1 zeigt in einem Blockschaltbild das erfindungsgemäße Steuergerät 100. Ein Prozessor 101, hier als Mikrocontroller ausgebildet, erhält über einen Transceiver, also einen Schnittstellenbaustein 102 über eine Diagnoseschnittstelle 103 das Software-Element, mit dem die Entsorgungszündung durchgeführt wird. Die Diagnoseschnittstelle 103 ist hier ein CAN-Bus oder eine K-Line oder andere Diagnoseschnittstellen, die dazu geeignet sind.

Im Mikrokontroller 101 wird mit einer Boot-Loader-Software 115 das Software-Element aus einem RAM als Speicher geladen und gestartet, sodass das Software-Element den Algorithmus zur Ansteuerung von Endstufen im Prozessor 101 konfiguriert und auch die Endstufen selbst sowie die Sensoremulation vornimmt. Die Konfiguration ist so, dass alle Zündelemente angesteuert werden. Der Algorithmus will demnach alle Zündelemente zünden. Es ist möglich, das Software-Element mit anderen Programmen zu starten.

Der Prozessor 101 ist über einen ersten SPI-Bus 104 mit einem Sicherheitsbaustein 105 sowie zwei Sensorbausteinen 111 und 112 und einem Schnittstellenbaustein 113, an den externe Sensoren angeschlossen sind, verbunden. Über einen zweiten SPI-Bus 109 ist der Mikrocontroller 101 mit einem Speicher 119, der als EEPROM ausgebildet ist, einem ersten Endstufen-IC 108 und einem zweiten Endstufen-IC 107 verbunden. Über einen Datenausgang ist der Prozessor 10 optional mit einem Leistungsschalter 110 verbunden, mit dem die Energiereservespannung auf die Endstufen 107 und 108 durchgeschaltet wird. Weiterhin ist es möglich, dass der Prozessor 101 einen sogenannten ASIC-Reset 117 durchführen kann, bei dem die Endstufen 107, 108 und die Sensorbausteine 111 und 112 zu einem Neustart veranlasst werden. Der SPI-Bus 104 ist über seine MISO-Leitung am Prozessor 101 mit einem Input-Output-Port verbunden, um über diese eigentliche Eingangsleitung durch den Prozessor 101 die emulierten Sensorwerte des virtuellen Sensor 116, der durch das Software-Element gebildet wird, zu übertragen. Die Eingangsleitung wird also als Ausgangsleitung verwendet. Damit wird dann der Sicherheitsbaustein 105 mittels der emulierten Sensorwerte derartig getäuscht, dass er über die Leitung 106 die Endstufen 107 und 108 freigibt. Der Mikrocontroller 101 wird dann über die Endstufen 107 und 108 die Zündung der Zündelemente veranlassen, da der Auslösealgorithmus auf dem Mikrocontroller 101 durch das Software-Element derartig konfiguriert wurde, dass die Auslösung nun erfolgen kann. Der Sicherheitsbaustein 105 überprüft und emuliert auch die Sensorwerte der über den Schnittstellenbaustein 113 extern angeschlossenen Sensoren. Das RAM ist dem Prozessor 101 zugeordnet.

Figur 2 veranschaulicht, was im Steuergerät 100 passiert. Im Verfahrensschritt 200 wird das Software-Element über die Schnittstelle 103 und den Transceiver 102 in den Prozessor 101 geladen und dann von der Boot-Loader-Software 115 gestapelt. Dies erfolgt dann in Verfahrensschritt 201. In Verfahrensschritt 202 wird dann das gestaltete Software-Element den Algorithmus im Prozessor 101 und die Endstufen 107 und 108 derartig konfigurieren, dass die Zündung aller Zündelemente erfolgen kann. Dies ist aber nur dann möglich, wenn auch der Sicherheitsbaustein 105 die Endstufen 107 und 108 freigibt. Dazu werden dann auf dem Bus 104 durch das Software-Element über einen virtuellen Sensor 116 Sensorwerte vorgetäuscht, die eine Auslösung aller Zündelemente rechtfertigen. Daraufhin gibt dann der Sicherheitsbaustein 105 über die Leitung 106 die Endstufen 107 und 108 frei. Daraufhin kann dann in Verfahrensschritt 204 die Zündung der Zündelemente über die Endstufen 107 und 108 erfolgen. Über die Schaltung 117, die dem Prozessor 101 zugeordnet ist, können zur Konfiguration die Endstufen-ICs 107 und 108 sowie die Sensorbausteine 111 und 112, die XY-Sensoren beinhalten, neu gestartet werden, um die Konfiguration dieser Bausteine für die Auslösung zu vereinfachen.

## Patentansprüche

1. Steuergerät für ein Rückhaltesystem, das derart konfiguriert ist, dass das Steuergerät (100) alle angeschlossenen pyrotechnischen Zündelemente zündet, wobei das Steuergerät (100) über eine Schnittstelle (103) ein Software-Element erhält, das derart konfiguriert ist, dass in Abhängigkeit von dem Software-Element alle Zündkreise (107, 108) und der Auslösealgorithmus zur Zündung aller Zündkreise konfiguriert werden, **dadurch gekennzeichnet, dass** für einen Sicherheitsbaustein (105) derartige Sensorwerte emuliert werden, sodass der Sicherheitsbaustein (105) alle Zündkreise (107, 108) freigibt, dass ein Prozessor (101) im Steuergerät mit dem Sicherheitsbaustein (105) und wenigstens einem Sensorbaustein (111, 112) und/oder wenigstens einem Schnittstellenbaustein (113) zum Anschluss von wenigstens einem externen Sensor über einen Bus (104) verbunden ist, wobei der Prozessor (101) auf dem Bus (104) die Sensorwerte emuliert, dass der Bus (104) ein SPI (Serial Peripherial Interface)-Bus ist, wobei der Prozessor (101) der Master ist und dadurch konfiguriert ist, dass der Prozessor (101) die emulierten Sensorwerte über die MISO-Leitung überträgt.

2. Steuergerät nach Anspruch 1, **dadurch gekennzeichnet, dass** die Schnittstelle (103) ein CAN-Bus ist.

3. Steuergerät nach Anspruch 1, **dadurch gekennzeichnet, dass** die Schnittstelle (103) eine K-Line ist.

4. Steuergerät nach Anspruch 1, **dadurch gekennzeichnet, dass** die MISO-Leitung mit einem IO-Port (118) des Prozessors (101) zur Übertragung der Sensorwerte verbunden ist.

5. Steuergerät nach einem der vorhergehenden Ansprüche, **dadurch gekennzeichnet, dass** im Prozessor (101) eine Boot-Loader Software (115) vorgesehen ist, die das Software-Element lädt und startet.

6. Steuergerät nach einem der Ansprüche 1 bis 5, **dadurch gekennzeichnet, dass** wenigstens ein Reset-Schalter (117) vorgesehen ist, der zum Neustart des wenigstens einen Sensorbausteins (111, 112) und des Sicherheitsbausteins (105) sowie der Zündkreise (107, 108) vorgesehen ist.

## Claims

1. Control unit for a restraint system, which is configured in such a manner that the control unit (100) fires all connected pyrotechnic firing elements, the control unit (100) receiving, via an interface (103), a software element which is configured in such a manner that all firing circuits (107, 108) and the triggering algorithm for firing all firing circuits are configured on the basis of the software element, **characterized in that** such sensor values are emulated for a safety module (105), so that the safety module (105) enables all firing circuits (107, 108), **in that** a processor (101) in the control unit is connected to the safety module (105) and to at least one sensor module (111, 112) and/or to at least one interface module (113) for connecting at least one external sensor using a bus (104), the processor (101) emulating the sensor values on the bus (104), **in that** the bus (104) is an SPI (Serial Peripheral Interface) bus, the processor (101) being the master and being configured by the processor (101) transmitting the emulated sensor values using the MISO line.

2. Control unit according to Claim 1, **characterized in that** the interface (103) is a CAN bus.

3. Control unit according to Claim 1, **characterized in that** the interface (103) is a communication line.

4. Control unit according to Claim 1, **characterized in that** the MISO line is connected to an IO port (118) of the processor (101) for the purpose of transmitting the sensor values.

5. Control unit according to one of the preceding claims, **characterized in that** the processor (101) contains boot loader software (115) which loads and starts the software element.

6. Control unit according to one of Claims 1 to 5, **characterized in that** provision is made of at least one reset switch (117) which is provided for the purpose of restarting the at least one sensor module (111, 112) and the safety module (105) and the firing circuits (107, 108).

## Revendications

1. Appareil de commande d'un système de retenue configuré pour que l'appareil de commande (11) déclenche tous les éléments d'allumage pyrotechniques, raccordés,
l'appareil de commande (100) recevant un élément de programme par une interface (103), cet élément de programme étant configuré pour que tous les circuits d'allumage (107, 108) et l'algorithme de déclenchement pour l'allumage de tous les circuits d'allumage soient configurés en fonction de cet élément de programme,
**caractérisé en ce qu'**
on effectue l'émulation de telles valeurs de capteur pour un composant de sécurité (105) de façon que le composant de sécurité (105) libère tous les circuits d'allumage (107, 108),
un processeur (101) de l'appareil de commande est relié au composant de sécurité (105) et au moins à un composant de capteur (111, 112) et/ou au moins un composant ou interface (113) pour brancher au moins un capteur externe par un bus (104),
le processeur (101) émulant les valeurs de capteur sur le bus (104),
le bus (104) est un bus SPI (bus interface série-périphérique) et le processeur (101) est le maître, en étant configuré pour que le processeur (101) transmette les valeurs de capteur émulées par la ligne MISO.

2. Appareil de commande selon la revendication 1,
**caractérisé en ce que**
l'interface (103) est un bus CAN ;

3. Appareil de commande selon la revendication 1,
**caractérisé en ce que**
l'interface (103) est une ligne K.

4. Appareil de commande selon la revendication 1,
**caractérisé en ce que**
la ligne MISO est reliée à un port 10 (118) du processeur (101) pour transmettre les valeurs de capteur.

5. Appareil de commande selon l'une quelconque des revendications précédentes,
**caractérisé par**
un programme de chargement (115) dans le processeur (101) qui charge et démarre les éléments de programme.

6. Appareil de commande selon l'une quelconque des revendications 1 à 5,
**caractérisé par**
au moins un commutateur de remise à l'état initial (117) prévu au moins pour redémarrer un composant de capteur (111, 112) et le composant de sécurité (105) ainsi que le circuit d'allumage (107, 108).
